# EUROPEAN PATENT SPECIFICATION

(11) **EP 4 148 310 B1**
(45) Date of publication and mention of the grant of the patent: **02.08.2023**
(21) Application number: 21306246.6
(22) Date of filing: 10.09.2021
(51) Int. Cl.: F16L 5/02, B60R 16/02, F16L 5/10, F16L 5/14, H02G 3/22

(54) **GROMMET**
TÜLLE
ENTRETOISE

(43) Date of publication of application: 15.03.2023
(73) Proprietor: Leoni Wiring Systems France, 78180 Montigny le Bretonneux (FR)
(72) Inventor: MATHEY, Jean-Marc, 92380 Garches (FR)
(74) Representative: FDST Patentanwälte

(56) References cited:
- JP-A- H0 927 226
- JP-A- 2021 048 657
- US-A1- 2007 143 956
- US-A1- 2019 111 868
- US-A1- 2020 070 750
- US-A1- 2020 231 103

## Description

The invention relates to a grommet, in particular a grommet, which is used for the sealed passage of a cable, line or conduit through a wall.

Grommets are used in a variety of ways and, irrespective of the specific application, are regularly used to seal two components against each other, closing or covering a gap that occurs between the two components. For example, in a vehicle a cable is routed from an engine compartment of the vehicle to a dashboard in an interior of the vehicle. The engine compartment is separated from the interior by means of a wall, and the cable is routed through this wall. For this purpose, the wall has a hole through which the cable is routed. A grommet is then inserted in the hole for sealing and said grommet comprises a lead-through into which the cable is inserted. In this way, the cable has no direct contact with the wall, but the grommet fills any space between the pipe and the wall and seals the two spaces on the two opposite sides of the wall against each other.

Various grommets are shown in JP H09 27226 A, US 2020/070750 A1, JP 2021 048657 A, US 2020/231103 A1, US 2019/111868 A1 and US 2007/143956 A1.

In general, but especially in the automotive sector, grommets have to meet particularly high requirements in terms of tightness against the passage of media, e.g. a fluid or a gas, and/or in terms of tightness against sound, as well as regularly high mechanical requirements and requirements for dimensioning the grommet due to installation space restrictions. These requirements may even lead to conflicting objectives in the design of the grommet.

Against this background, it is an objective of the present invention to specify an improved grommet. In particular, the grommet should seal as well as possible against the passage of media and/or sound, withstand mechanical loads as well as possible and also take up as little installation space as possible.

The task is solved according to the invention by a grommet with the features according to claim 1. Advantageous designs, further developments and variants are the subject of the subclaims.

A core idea of the present invention is, in particular, to design a grommet with a special sealing lip in order to meet the requirements mentioned. The sealing lip, in particular its geometry and especially its cross-section, is designed in such a way that the sealing lip is compressible (i.e., deformable) in a specific and particularly advantageous manner during assembly and, if necessary, also thereafter in the event of a mechanical load; namely in particular in such a way that the best possible sealing is still realized, but with a high degree of mechanical flexibility and in a particularly small installation space.

The grommet described here has a sealing lip. The sealing lip is used for establishing sealing contact with a mounting surface, e.g. a side of a wall. The wall is, for example, a metal sheet. The sealing lip runs preferably annularly around a longitudinal axis which extends in an axial direction and at the same time perpendicular to a radial direction. According to the invention, the sealing lip has a spring section configured such that the sealing lip is compressible (i.e. can be compressed), in particular during assembly, i.e. mounting, of the grommet in or on the wall. Due to the spring section, the sealing lip is also referred to as a "spring sealing lip". Because of the spring section, the sealing lip is not designed as a simple ramp, but has a more complex geometry.

The term "compressible" is understood to mean in particular deformable by a pressing movement, crushable, collapsible or foldable. The sealing lip is thus designed to compress or collapse in on itself, in particular in the event of a mechanical load in the axial direction and especially during assembly. Conversely, the sealing lip or at least the spring section is preferably elastic, so that when the load decreases, the sealing lip decompresses again, preferably automatically due to a spring action of the spring section. The sealing lip thus unfolds, expands or decompresses again.

The sealing lip is suitably cone- or bell-shaped to a first approximation. Preferably, the sealing lip is rotationally symmetrical with respect to the longitudinal axis. The grommet preferably has an inner body to which the sealing lip is connected in a radially outward direction, so that the sealing lip completely surrounds the inner body. In a suitable embodiment, the inner body serves to implement further functions of the grommet aside from sealing, e.g. for the sealing retention of a cable, line or conduit by means of a socket or spout as part of the inner body. The inner body may have any number of sockets or spouts, e.g. one or two or even more. However, the presence and the exact design of the inner body and whether it comprises any sockets or spouts are not important in the present case.

The grommet and in particular its sealing lip have a compressed, i.e. loaded, state and an uncompressed, i.e. unloaded, state. During assembly of the grommet, said grommet is regularly compressed and then preferably remains compressed even in the assembled state, so that the sealing lip is pressed permanently against the mounting surface and thus develops a sealing effect. The sealing lip is thus pretensioned, so to speak, by the spring section in the assembled state.

The spring section is in particular circumferential and then runs annularly around the longitudinal axis. The spring section advantageously realizes a spring function, in particular in the axial direction, so that the sealing lip can be compressed at least in the axial direction. Accordingly, the spring section is designed in an overall spring-like manner and acts accordingly in the manner of a spring, especially as viewed in a cross section along the longitudinal axis. Said cross section along the longitudinal axis results from a cross-sectional plane which is spanned by the radial direction on the one hand and the axial direction on the other hand and in which the longitudinal axis lies. Insofar as only a cross section is referred to in the following, this cross section along the longitudinal axis is meant, unless the respective context indicates otherwise.

The invention is based in particular on the observation that a grommet can in principle be designed with a circumferential, ramp-shaped sealing lip which projects at a certain angle from an inner body of the grommet and bears sealingly against a mounting surface. When subjected to a mechanical load in the axial direction, especially during assembly, the sealing lip is splayed or spread further open (typically, the angle to the inner body is increased) and thus develops its sealing effect. The actual ramp-shaped geometry of the sealing lip is largely retained, the sealing lip is merely at a different angle. However, this greatly increases the diameter of the grommet and occupies corresponding installation space. The same applies to mechanical loads in the axial direction in the assembled state. In addition, such a grommet may not be able to absorb mechanical loads in the radial direction, i.e. perpendicular to the axial direction, sufficiently well and in such a case runs the risk of being lifted off the mounting surface and losing its sealing effect.

In contrast to this, the spring section described herein advantageously allows compression of the sealing lip in such a way that no additional installation space is required on the mounting surface when the sealing lip is subjected to a mechanical load. Instead, the spring section is compressed, in particular in the axial direction, and thus absorbs the mechanical load without the sealing lip on the mounting surface being expanded, at least not appreciably.

The grommet is, e.g., a dash panel grommet, for sealing when routing a cable, line or conduit from an engine compartment of a vehicle to a dash panel in an interior of said vehicle. However, the present invention is not restricted to such a use and the inventive concept**,** as defined in the appended claims, may be used for any grommet.

In a suitable embodiment the grommet comprises a second sealing lip or counter sealing lip, said second sealing lip being located on the opposite side of the wall in the assembled (i.e. mounted) state such that the wall is sandwiched between the two sealing lips, thereby sealing against the wall from both sides. However, the presence and exact design of said second sealing lip are not relevant here. The second sealing lip may be a simple ramp-shaped sealing lip, but advantageously may also be configured as a spring sealing lip as described herein such that the grommet has two spring sealing lips. In one suitable embodiment the second sealing lip has a diameter larger than a diameter of the spring sealing lip, but the second sealing lip may also be dimensioned otherwise. Preferably, the second sealing lip is made from the same material as the spring sealing lip and both sealing lips are manufactured in one piece, i.e. monolithically.

A particularly preferred design is one in which the spring section is configured such that the sealing lip is widened (i.e. flared) in the axial direction in the uncompressed (i.e. unloaded) state, in particular like a cone or funnel, and in the compressed (i.e. loaded) state is bulged in the radial direction and thus perpendicular to the axial direction. More specifically: the spring section assumes a curved shape upon loading. The spring section is preferably not bulged in the uncompressed state. Accordingly, the spring effect is realized precisely by the fact that the spring section bulges in the radial direction when loaded, thereby compressing the sealing lip in the axial direction. This has the particular advantage that an end section of the sealing lip, which is in direct contact with the mounting surface after mounting, is not expanded during a load and thus does not require more installation space on the mounting surface. Instead, the spring section is arched so that the end section remains in a substantially unchanged position on the mounting surface.

The terms "funnel-shaped" and "bell-shaped" generally mean an angled course and orientation of the sealing lip relative to the longitudinal axis, which results in the sealing lip having an overall funnel or bell shape as it passes around the longitudinal axis. However, it is not meant that the sealing lip itself has a varying thickness in order to obtain a funnel or bell shape in cross-section. In fact, an embodiment is preferred in which the sealing lip has an inner wall which roughly points towards the longitudinal axis and an outer wall which roughly points in the opposite direction. Viewed in cross-section the inner wall preferably has a contour which follows a contour of the outer wall, preferably even such that the sealing lip has a constant thickness at least along the spring section. In addition or in the alternative, the sealing lip has a constant wall thickness at least along the spring section, said wall thickness being measured perpendicular to the surface of the sealing lip or spring section, in particular perpendicular to the inner wall and outer wall. Preferably, the wall thickness of the spring section remains unchanged, at least substantially, upon compression, i.e. when transitioning from the unloaded to the loaded state (the same holds vice versa upon decompression, i.e. when transitioning from the loaded to the unloaded state).

In principle, the spring section bulges in the radial direction either outward (and is then convex in the compressed state) or inward (and is then concave in the compressed state). However, according to the invention, outward bulging (i.e. curvature) is preferred, and hence, the spring section is configured such that it bulges outward when the sealing lip is mounted and thus generally when it is compressed. This has the advantage that more volume is available inside the grommet than without a bulge or than with an inward bulge, as a result of which the grommet has better acoustic behavior, especially improved sealing against sound.

Preferably, the thickness of the material of the spring section does not change, at least not substantially, upon bulging, i.e. upon compressing. The curved shape is such that the inner wall and the outer wall of the spring section are curved in the same direction. In other words: the spring section bulges in one direction only and, hence, is so to say folded. This is in opposition to being squeezed such that the thickness increases, as would likely be the case for a predominantly soft material such as a foam or similar. Such squeezing does preferably not occur or is at least not the main mechanism responsible for the compression of the sealing lip. Instead, the spring section is so to say folded such that a bulge is created. Again, in other words: the inner wall and the outer wall of the spring section move into the same direction (both radially outwards) upon compression, such that the thickness of the sealing lip is preserved, at least substantially.

It is expedient that the sealing lip is rounded at the end, in particular that the aforementioned end section is rounded, preferably such that the sealing lip performs a rolling movement in the radial direction when mounted on a mounting surface, thereby deforming the spring section and compressing the sealing lip in the axial direction. In other words: upon mounting the spring section is tilted and deflected in the radial direction and is then deformed (namely: compressed) as a result. As a result, the sealing lip is compressed in the axial direction. Alternatively or additionally, the sealing lip is rounded at the end in such a way that it slips over the mounting surface, i.e., performs a slipping movement, when subjected to a mechanical load, but advantageously without losing its sealing effect, since the end section continues to be pressed against the mounting surface by the preloaded spring section. Preferably, the rolling and/or slipping movement of the sealing lip, particularly its end section, is inwards in the radial direction, thereby reducing the installation space on the mounting surface.

The sealing lip is suitably rounded by having a spherical or drop-like shape at the end, viewed in cross-section along the longitudinal axis. Due to the rounded design, the end section rolls over the mounting surface when a load is applied, so that the spring section is driven in the radial direction and thus bulges. In particular, the spring section is pulled apart.

According to the invention, the spring section is spring-like in that it has several segments (also called joints) which connect to each other and thus make the spring section as a whole articulated or hinged. The spring section preferably has two, three or four segments, but other numbers are also suitable in principle depending on the application.

In an advantageous embodiment, the spring section is step-shaped when viewed in cross-section along the longitudinal axis, at least in the uncompressed state. In particular, each segment of the spring section forms a single step. In the uncompressed state, the steps preferably point in the same direction. In the compressed state, the segments generally may collapse into a meandering shape or generally a zigzag course, so that the segments then point alternately in opposite directions or in the alternative bulge together outwardly, as already described above. In the present case with the spring section configured such that it bulges outwards when it is compressed, the segments bulge together outwardly in such an embodiment.

In an advantageous embodiment, the spring section is meander-shaped when viewed in cross-section along the longitudinal axis, i.e. has a meander shape, at least in the uncompressed state. Here, in particular, each segment of the spring section forms a single bend. The bends are then lined up with alternating curvature directions. In the compressed state, the segments preferably collapse in such a way that the meander shape is stretched in the radial direction and compressed in the axial direction. In general, a respective bend thus deforms outward in the radial direction, such that the meander-shape in generally preserved or alternatively, as already described in connection with the steps, all of the bends bulge outwardly, so that the meander shape is lost and broken up, so to speak. In the present case with the spring section configured such that it bulges outwards when it is compressed, the bends bulge outwardly in such an embodiment.

In a particularly practical embodiment, the sealing lip has a mass section which is attached to the end of the spring section and which, measured in the radial direction, is thicker than the spring section. The sealing lip is thus thickened at the end, the mass section thus having a greater thickness than the spring section, the thickness being measured in cross section and in the radial direction, i.e. perpendicular to the longitudinal axis. In particular, the term "mass" is understood as referring to the increased thickness and preferably also an increased volume of the mass section when compared to the spring section. In a suitable embodiment, this also leads to the mass section being heavier (i.e., having a larger mass) than the spring section, although this is not necessarily the case. For example, in another suitable embodiment the mass section is made from a material which is less dense than the material of the spring section, thereby realizing a mass section which is thicker and preferably more voluminous than the spring section but not necessarily heavier. Preferably, the end of the spring section is that end, which is the farthest away from the longitudinal axis at least in the uncompressed state. If no mass section in attached to the end of the spring section, then said end is preferably a free end.

The mass section forms with the spring section a mass-spring system with advantageous mechanical properties. Since the mass section is thicker than the spring section, the spring section is primarily deformed and specifically compressed when a load is applied, while the mass section is not significantly deformed, so that the sealing effect of the grommet is maintained. In accordance with these different functions of the two sections (mass section and spring section) in the deformation of the sealing lip, the spring section is also referred to as the "first deformation zone" and the mass section as the "second deformation zone". Even though the mass section is not necessarily deformed itself, it significantly influences the deformation of the spring section. In particular, this design favors axial deformation of the sealing lip over radial deformation and even advantageously limits radial deformation and thus radial protrusion, so that installation space is saved. The sealing lip thus does not expand predominantly in the radial direction, but is compressed in the axial direction and the spring section is folded together in the axial direction, so to speak, which limits the expansion of the sealing lip in the radial direction.

Preferably, the mass section is an end section of the sealing lip as already described above and then advantageously spherical or drop-shaped in cross-section along the longitudinal axis, so that the sealing lip as a whole is rounded at the end.

As already indicated, the grommet preferably has an inner body to which the sealing lip is connected in the radial direction outwardly. Further preferably, the spring section pivotally connects the inner body to the mass section. In particular, the spring section acts as a link or hinge which is collapsed in the loaded state and is thus in particular bulged overall, presently in a radially outward direction.

The mass section suitably has a thickness in the range of 4 mm to 5 mm. The thickness preferably being measured in cross section and in the radial direction, i.e. perpendicular to the longitudinal axis.

The spring section suitably has a thickness in the range of 1.5 mm to 3 mm. The thickness preferably being measured in cross section and in the radial direction, i.e. perpendicular to the longitudinal axis.

In one useful embodiment, the grommet is configured to be mounted in or on a wall and has at least one socket or spout, particularly as part of the inner body, for passing a cable, line or conduit through the wall. Alternatively, a socket or spout may also be used for embedding any other functional component into the grommet. Any socket or spout of the grommet is not necessarily concentric with the sealing lip, but may also be non centric and run parallel to and at some radial distance from the longitudinal axis.

Preferably, the sealing lip, the sealing lip and inner body or the entire grommet is made from an elastic material. Suitably, the elastic material is a plastic, preferably EPDM, such that at least the sealing lip is made of EPDM (i.e. ethylene-propylene-diene rubber). Preferably, the inner body is also made of EPDM and, in addition, is expediently made in one piece, i.e. monolithically with the sealing lip. Overall, the grommet is preferably made of a rubber and/or a thermoplastic, at least predominantly. Some embodiments of the grommet may include one or more inserts (see below), which are not necessarily made from an elastic material, but rather preferably are made from a rigid material, e.g. PP, PE, ABS, a metal or other material.

Also advantageous is an embodiment in which the grommet has an insert (first insert) for fastening the grommet in or on the wall in such a way that the spring section remains compressed after assembly and is thus pretensioned. For this purpose, the insert preferably comprises a number of fastening elements. In a particularly suitable embodiment, the fastening elements are configured as clips for clipping the grommet onto or into the wall. The insert is suitably made of a more rigid material than the sealing lip and possibly also the inner body. A respective clip has a head which forms an undercut, whereby the clip as a whole is formed as a barb. When the grommet is mounted in or on a wall, the insert is pushed through the hole from one side of the wall in such a way that the heads are pushed through and then spring back outwards in a radial direction on the other side and engage, thereby hooking the grommet in the wall. The sealing lip itself is not pushed through the hole in the wall, but is merely pressed against one side and thereby compressed. In the assembled state, the sealing lip on the one hand and the head or heads on the other hand are then arranged on opposite sides of the wall, so that the wall is clamped accordingly. Due to the spring action of the now compressed spring section, the grommet is mounted particularly firmly in the wall.

In an advantageous alternative embodiment, said insert is rigid, in particular compared to the sealing lip, and serves as mechanical stabilization of the grommet. Such function may also be realized with a corresponding insert independently from above-described fastening function.

In a suitable embodiment, the grommet has an insert (second insert) to restrict the air volume inside the grommet and thereby improve its acoustic behavior. Such an insert is preferably plate shaped and extends perpendicular to the longitudinal axis. Preferably, the insert surrounds any socket or spout of the inner body. Said insert is preferably separate to, but may also be identical with the insert for fastening and/or mechanical stability mentioned before.

One advantage in particular is that the special geometry of the sealing lip primarily causes axial deformation of the sealing lip, in particular essentially independently of the direction of a mechanical load. At the same time, the special geometry of the sealing lip also limits its radial deformation. This advantageously minimizes the expansion or spreading of the grommet on the mounting surface when absorbing a mechanical load, e.g. due to movement of a cable, line or conduit which is held by the grommet. Excessive expansion of the grommet on the mounting surface in a radially outward direction is prevented when the grommet is pressed against the mounting surface under a mechanical load. Depending on the mechanical load, the spring section is advantageously compressed like a spring (this may also include the described bulging in the radial direction) or decompressed, thereby making it possible to absorb particularly strong translations of the grommet while still maintaining optimum sealing. The sealing effect between the sealing lip and the mounting surface is thus maintained despite strict boundary conditions.

A further advantage is in particular that particularly small dimensions, especially thicknesses, are possible for the grommet and especially for the sealing lip, e.g. as already described above. This saves material.

A further advantage is in particular that, especially in the embodiment with a mass section, a contact area between the sealing lip and the mounting surface is increased, resulting in a better seal. Since the mass section is specifically thicker than the spring section, the mass section also has a corresponding mass, e.g. 10 g - 15 g, and then, depending on the orientation of the grommet in the mounted state relative to gravity, further contributes to the seal, namely by being supported by gravity, provided that the sealing lip is placed on the mounting surface from above. However, in the case of a grommet between the engine compartment and the interior of a vehicle, the longitudinal direction typically extends parallel to the roadway and perpendicular to gravity.

A further advantage is in particular the minimization of the installation space required by the grommet, as already mentioned above on several occasions. Vehicle manufacturers regularly specify a limited area on the mounting surface, e.g. a surface of a metal sheet, beyond which the grommet should not protrude. The special geometry of the sealing lip described here ensures a particularly high level of sealing in a particularly small installation space.

Another advantage is that the direct contact of the sealing lip, especially the end section, with the mounting surface results in a particularly high level of tightness against media, especially water, and sound.

Another advantage is in particular that the grommet is easier to assemble, as lower forces are required during assembly, especially compared to a grommet with only a ramp-shaped sealing lip. This then leads to less exhaustion of workers assembling the grommet.

The task is also solved in particular by using the described grommet for sealing against a mounting surface. Furthermore, the task is also solved in particular by a method for manufacturing a grommet as described and by a method for mounting a grommet as described. The explanations regarding the grommet also apply accordingly to the use and the two methods.

Examples of embodiments of the invention are explained in more detail below with reference to a drawing. Said drawing comprises several figures, schematically showing as follows:
- Fig. 1: a grommet in a perspective view from behind,
- Fig. 2: the grommet from Fig. 1 in a front view,
- Fig. 3: the grommet from Fig. 1 in a rear-side view,
- Fig. 4: the grommet from Fig. 1 in a side view,
- Fig. 5: the grommet from Fig. 1 in a cross-sectional view along a longitudinal axis,
- Fig. 6: a sealing lip of the grommet from Fig. 1 in a cross-sectional, perspective view,
- Fig. 7: a partial, cross-sectional view of the grommet from Fig. 1 in an uncompressed state,
- Fig. 8: a partial, cross-sectional view of the grommet from Fig. 1 in a compressed state.

The figures show a possible embodiment of a grommet 2 with a special sealing lip 4. The sealing lip 4 is designed in such a way that the sealing lip 4 is compressible (i.e., deformable) in a specific manner during assembly and, if necessary, also thereafter in the event of a mechanical load. By virtue of the special sealing lip 4, the grommet 2 ensures a high degree of tightness while still allowing flexibility and while also requiring minimal installation space.

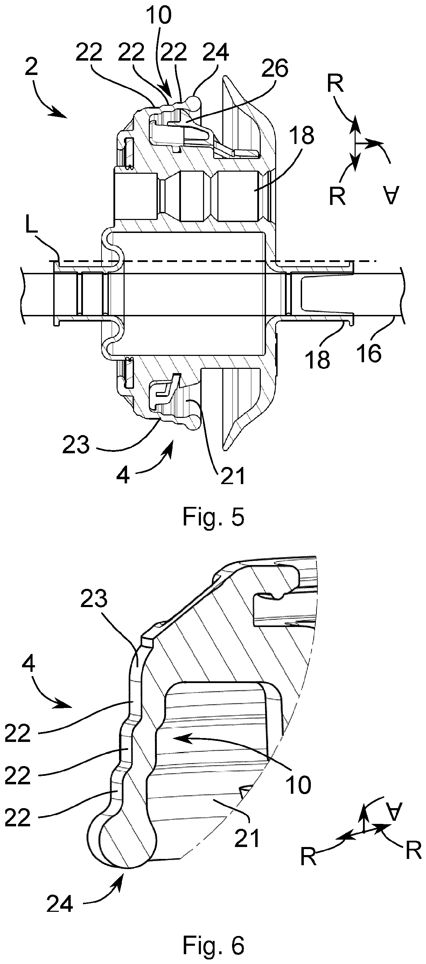

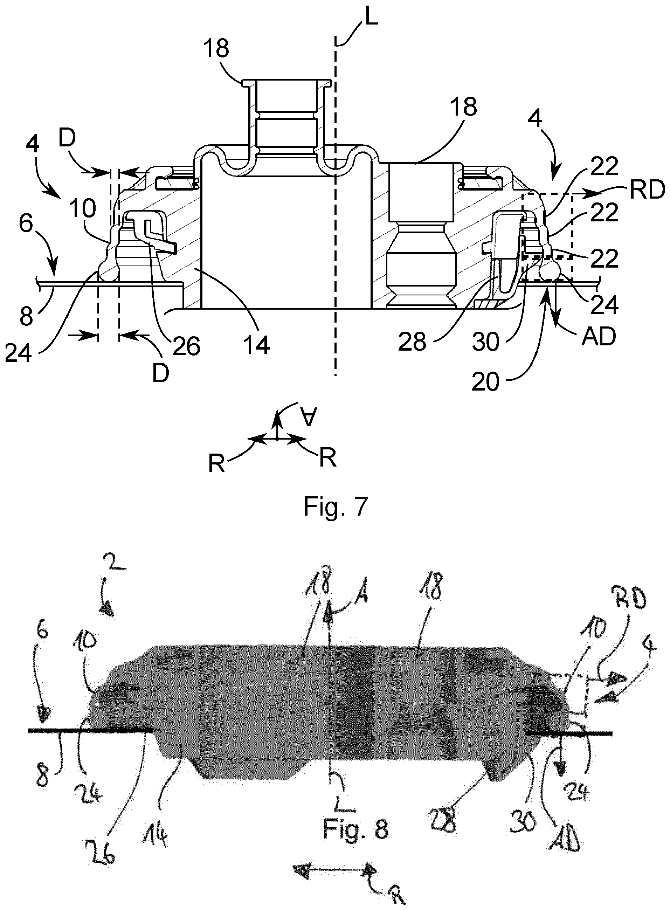

The gromet's 2 sealing lip 4 is used for establishing sealing contact with a mounting surface 6, e.g. a side of a wall 8. The wall 8 is, for example, a metal sheet as shown in Fig. 7 and 8. In the present example, the sealing lip 4 runs annularly around a longitudinal axis L which extends in an axial direction A and at the same time perpendicular to a radial direction R. The sealing lip 4 has a spring section 10 configured such that the sealing lip 4 is compressible, in particular during assembly, i.e. mounting, of the grommet 2 in or on the wall 8. Due to the spring section 10, the sealing lip 4 is also referred to as a "spring sealing lip". Because of the spring section 10, the sealing lip 4 is not designed as a simple ramp, but has a more complex geometry, e.g. as shown in the close-up view of Fig. 6.

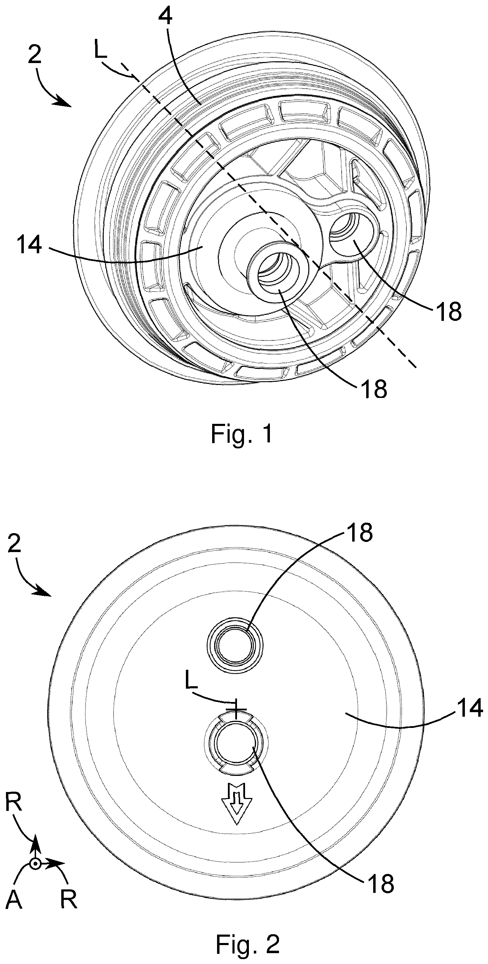

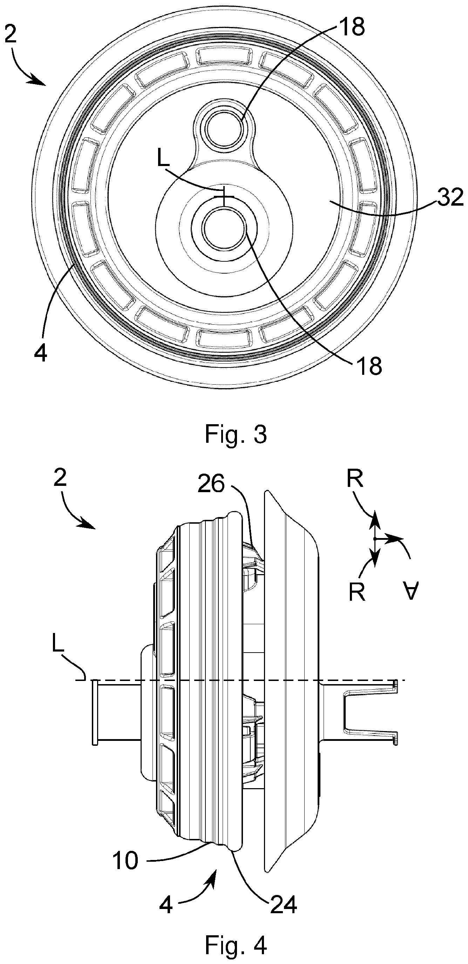

The sealing lip 4 shown here is cone- or bell-shaped to a first approximation, as can be seen in the side view of Fig. 4, the cross-sections of Figs. 5 and 7 and again in the detailed view of Fig. 6. In the embodiment shown here, the sealing lip 4 is rotationally symmetrical with respect to the longitudinal axis L. The grommet 2 optionally has an inner body 14 to which the sealing lip 4 is connected in a radially outward direction, so that the sealing lip 4 completely surrounds the inner body 14. In the present embodiment, the inner body 14 serves to implement further functions of the grommet 2 aside from sealing, e.g. for the sealing retention of a cable, line or conduit 16 (see Fig. 5) by means of a socket or spout 18 as part of the inner body 14. The inner body 14 may have any number of sockets or spouts 18, in Figs. 1, 2, 3 and 5 two sockets or spouts 18 are visible.

The grommet 2 and more specifically its sealing lip 4 have a compressed, i.e. loaded, state, shown in Fig. 8, and an uncompressed, i.e. unloaded, state, shown in Fig. 7. During assembly of the grommet 2, said grommet 2 is regularly compressed and then remains compressed even in the assembled state, so that the sealing lip 4 is pressed permanently against the mounting surface 6 and thus develops a sealing effect. The sealing lip 4 is thus pretensioned, so to speak, by the spring section 10 in the assembled state as, e.g., shown in Fig. 8.

A possible embodiment for the spring section 10 is particularly shown in the detailed cross-sectional view of Fig. 6, but its special geometry is also clearly visible in the remaining figures. The spring section 10 is circumferential and runs annularly around the longitudinal axis L. The spring section 10 realizes a spring function, in particular in the axial direction A, so that the sealing lip 4 can be compressed at least in the axial direction A. Accordingly, the spring section 10 is designed in an overall spring-like manner and acts accordingly in the manner of a spring, especially as viewed in a cross section along the longitudinal axis L as shown in Figs. 5, 7 and 8. Said cross section along the longitudinal axis L results from a cross-sectional plane which is spanned by the radial direction R on the one hand and the axial direction A on the other hand and in which the longitudinal axis L lies.

The special geometry of the sealing 4 is based on the observation that a grommet 2 can in principle be designed with a circumferential, ramp-shaped sealing lip which projects at a certain angle from the inner body 14 of the grommet 2 and bears sealingly against the mounting surface 6. When subjected to a mechanical load in the axial direction A, especially during assembly, the ramp-shaped sealing lip is splayed or spread further open while the actual ramp-shaped geometry of the sealing lip is largely retained. However, this greatly increases the diameter of the grommet 2 and occupies corresponding installation space. The same applies to mechanical loads in the axial direction A in the assembled state. In addition, such a grommet 2 may not be able to absorb mechanical loads in the radial direction R sufficiently well and in such a case runs the risk of being lifted off the mounting surface 6 and losing its sealing effect.

In contrast to this, the spring section 10 described here advantageously allows compression of the sealing lip 4 in such a way that no additional installation space is required on the mounting surface 6 when the sealing lip 4 is subjected to a mechanical load. Instead, the spring section 10 is compressed, in particular in the axial direction A, and thus absorbs the mechanical load without the sealing lip 4 on the mounting surface 6 being expanded, at least not appreciably, as is evident when comparing Figs. 7 and 8 to each other.

In the present case, the spring section 10 is configured such that the sealing lip 4 is widened (i.e. flared) in the axial direction A in the uncompressed (i.e. unloaded) state, like a cone or funnel, and in the compressed (i.e. loaded) state is bulged in the radial direction R. More specifically: the spring section 10 assumes a curved shape upon loading, see Fig. 8. The spring section 10 shown here is not bulged in the uncompressed state, as is evident from Fig. 7. Accordingly, the spring effect is realized precisely by the fact that the spring section 10 bulges in the radial direction R when loaded, thereby compressing the sealing lip 4 in the axial direction A. An end section 20 of the sealing lip 4, which is in direct contact with the mounting surface 6 after mounting, is not expanded during a load and thus does not require more installation space on the mounting surface 6. Instead, the spring section 10 is arched so that the end section 20 remains in a substantially unchanged position on the mounting surface 6.

The sealing lip 4 of the present embodiment has an inner wall 21 which roughly points towards the longitudinal axis L and an outer wall 23 which roughly points in the opposite direction. Viewed in cross-section the inner wall 21 has a contour which follows a contour of the outer wall 23. As can be seen in Figs. 6 and 7 the sealing lip 4 has a constant thickness D at least along the spring section 10, the thickness D being measured in the radial direction R. In addition or in the alternative, the sealing lip 4 has a constant wall thickness at least along the spring section 10, said wall thickness being measured perpendicular to the surface of the sealing lip 4 or spring section 10, i.e. perpendicular to the inner wall 21 and outer wall 23.

As can be seen in the cited figures, the thickness D of the material of the spring section 10 in the present case does not change, at least not substantially, upon bulging, i.e. upon compressing. The curved shape is such that the inner wall 21 and the outer wall 23 of the spring section 10 are curved in the same direction. In other words: the spring section 10 bulges in one direction only and, hence, is so to say folded. This is in opposition to being squeezed such that the thickness D increases. Such squeezing does not occur here or is at least not the main mechanism responsible for the compression of the sealing lip 4. Instead, the spring section 10 is so to say folded such that a bulge is created. Again, in other words: the inner wall 21 and the outer wall 23 of the spring section 10 move into the same direction upon compression, such that the thickness D of the sealing lip 4 is preserved, at least substantially.

The spring section 10 in the present embodiment bulges in the radial direction R outward (and is then convex in the compressed state). In other words, the spring section 10 is configured such that it bulges outward when the sealing lip 4 is mounted and thus generally when it is compressed. This also leads to more volume being available inside the grommet 2 than without a bulge or than with an inward bulge, for an improved acoustic behavior.

As can be seen in the figures, in particular Fig. 6, the sealing lip 5 is rounded at the end, more specifically the aforementioned end section 20 is rounded such that the sealing lip 4 performs a rolling movement in the radial direction R when mounted on the mounting surface 6, thereby deforming the spring section 10 and compressing the sealing lip 4 in the axial direction A. This rolling movement can be inferred when comparing Figs. 7 and 8 to each other, showing that upon mounting the spring section 10 is tilted by the end section and deflected in the radial direction R. As a result, the sealing lip 4 is compressed in the axial direction A. Alternatively or additionally, the sealing lip 4 slips over the mounting surface 6 when subjected to a mechanical load, but without losing its sealing effect, since the end section 20 continues to be pressed against the mounting surface 6 by the preloaded spring section 10 (not shown). In the present embodiment, the rolling and/or slipping movement of the end section 20 is directed inwards.

The sealing lip 4 shown here is rounded by having a spherical or drop-like shape at the end, viewed in cross-section along the longitudinal axis L. Due to the rounded design, the end section 20 rolls over the mounting surface 6 when a load is applied, so that the spring section 10 is driven in the radial direction R and thus bulges and is pulled apart.

The spring section 10 shown here is spring-like in that it has several segments 22 (also called joints) which connect to each other and thus make the spring section 10 as a whole articulated or hinged. The spring section 10 preferably has two, three (as shown here) or four segments 22, but other numbers are also suitable in principle depending on the application.

In the exemplary embodiment of Fig. 7, the spring section 10 is step-shaped when viewed in cross-section along the longitudinal axis L, at least in the uncompressed state. Each segment 22 of the spring section 10 forms a single step. In the uncompressed state, the steps point in the same direction. In the compressed state shown in Fig. 8, the segments 22 bulge together outwardly, as already described above.

In another exemplary embodiment, which is not explicitly shown here, the spring section 10 is meander-shaped in the uncompressed state when viewed in cross-section along the longitudinal axis. In such an embodiment, each segment 22 of the spring section 10 forms a single bend. The bends are then lined up with alternating curvature directions. In the compressed state, the segments 22 collapse in such a way that the meander shape is stretched in the radial direction R and compressed in the axial direction A. In general, a respective bend thus deforms either inward or outward in the radial direction R such that the meander-shape is generally preserved or alternatively, as already described in connection with the steps, all of the bends bulge either inwardly or outwardly, so that the meander shape is lost and broken up, so to speak. In the present case, the bends would bulge outwards.

In the embodiment shown here, the sealing lip 4 has a mass section 24 which is attached to the end of the spring section 10 and which, measured in the radial direction R, is thicker than the spring section 10. The sealing lip 4 is thus thickened at the end, the mass section 24 thus having a greater thickness D than the spring section 10, the thickness D being measured in cross section and in the radial direction R. The mass section 24 is an end section 20 of the sealing lip 4 as already described above. The mass section 24 forms with the spring section 10 a mass-spring system with advantageous mechanical properties. Since the mass section 24 is thicker than the spring section 10, the spring section 10 is primarily deformed and specifically compressed when a load is applied, while the mass section 24 is not significantly deformed, so that the sealing effect of the grommet 2 is maintained. In accordance with these different functions of the two sections (mass section 24 and spring section 10) in the deformation of the sealing lip 4, the spring section 10 is also referred to as the "first deformation zone" and the mass section 24 as the "second deformation zone". Both deformation zones are indicated in Figs. 7 and 8 by a respective rectangular box and their respective function, namely relating to axial deformation AD and radial deformation RD, is indicated by a corresponding arrow. Even though the mass section 24 is not necessarily deformed itself, it significantly influences the deformation of the spring section 10. In particular, this design favors axial deformation AD of the sealing lip 4 over radial deformation RD and limits said radial deformation RD and thus radial protrusion. The sealing lip 4 thus does not expand predominantly in the radial direction R, but is compressed in the axial direction A and the spring section 10 is folded together in the axial direction A, so to speak, which limits the expansion of the sealing lip 4 in the radial direction R.

As already indicated, the grommet 2 shown here has an inner body 14 to which the sealing lip 4 is connected in the radial direction R outwardly. The spring section 10 pivotally connects the inner body 14 to the mass section 24 and acts as a link or hinge which is collapsed in the loaded state.

The sealing lip 4 is made of, e.g., EPDM (i.e. ethylene-propylene-diene rubber). Optionally, the inner body 14 is also made of EPDM. In addition (and as shown here) the inner body 14 and the sealing lip 4 are made in one piece, i.e. monolithically.

The grommet 2 shown here also has an insert 26 (first insert) for fastening the grommet 2 in or on the wall 8 in such a way that the spring section 10 remains compressed after assembly and is thus pretensioned. For this purpose, the insert 26 has a number of clips 28 for clipping the grommet 2 onto or into a wall 8, see Figs. 5, 7 and 8. The insert 26 is made of a more rigid material than the sealing lip 4. A respective clip 28 has a head 30 which forms an undercut, whereby the clip 28 as a whole is formed as a barb. When the grommet 2 is mounted in or on the wall 8, the insert 26 is pushed through the hole from one side of the wall 8 in such a way that the heads 30 are pushed through and then spring back outwards in the radial direction R on the other side and engage, thereby hooking the grommet 2 in the wall 8. The sealing lip 4 itself is not pushed through the hole in the wall 8, but is merely pressed against one side and thereby compressed. In the assembled state, the sealing lip 4 on the one hand and the heads 30 on the other hand are then arranged on opposite sides of the wall 8, so that the wall 8 is clamped accordingly. Due to the spring action of the now compressed spring section 10, the grommet 2 is mounted particularly firmly in the wall.

Here, said insert 26 is rigid compared to the sealing lip 4 and also serves as mechanical stabilization of the grommet 2. Such function, however, may also be realized with a corresponding insert independently from above-described fastening function.

Furthermore, the grommet 2 shown here has another insert 32 (second insert) to restrict the air volume inside the grommet 2 and thereby improve its acoustic behavior. The insert 32 is visible in Fig. 3. The insert 32 is plate shaped and extends perpendicular to the longitudinal axis L and surrounds any socket or spout 18 of the inner body 14.

The inserts 26, 32 are each purely optional and their respective design may be entirely different from the one shown here.

### List of reference signs

- 2: grommet
- 4: sealing lip
- 6: mounting surface
- 8: wall
- 10: spring section
- 12: ramp
- 14: inner body
- 16: cable, line or conduit
- 18: socket or spout
- 20: end section
- 21: inner wall
- 22: segment
- 23: outer wall
- 24: mass section
- 26: insert (first insert)
- 28: clip
- 30: head
- 32: insert (second insert)
- A: axial direction
- AD: axial deformation
- D: thickness
- L: longitudinal axis
- R: radial direction
- RD: radial deformation

## Claims

1. Grommet (2), which has a sealing lip (4),
- wherein the sealing lip (4) runs around a longitudinal axis (L) which extends in an axial direction (A),
- wherein the sealing lip (4) has a spring section (10) configured such that the sealing lip (4) is compressible,
**characterized in that**
- the spring section (10) is spring-like **in that** it has several segments (22) which connect to each other and thus make the spring section (10) as a whole articulated or hinged,
- the spring section (10) is configured such that it bulges outwards when it is compressed.

2. Grommet (2) according to claim 1,
wherein the spring section (10) is configured such that the sealing lip (4) is widened in the axial direction (A) in an uncompressed state and is bulged in the radial direction (R) in a compressed state.

3. Grommet (2) according to any one of claims 1 to 2,
wherein the sealing lip (4) is rounded at the end such that it performs a rolling movement in the radial direction (R) when mounted on a mounting surface (6), thereby deforming the spring section (10) and compressing the sealing lip (4) in the axial direction (A).

4. Grommet (2) according to any one of claims 1 to 3,
wherein the spring section (10) is step-shaped when viewed in cross-section along the longitudinal axis (L).

5. Grommet (2) according to any one of claims 1 to 3,
wherein the spring section (10) is meander-shaped when viewed in cross-section along the longitudinal axis (L).

6. Grommet (2) according to any one of claims 1 to 5,
wherein the sealing lip (4) has a mass section (24) which is attached to the end of the spring section (10) and which, measured in the radial direction (R), is thicker than the spring section (10).

7. Grommet (2) according to claim 6,
wherein the mass section (24) is spherical or drop-shaped in cross-section along the longitudinal axis (L).

8. Grommet (2) according to any one of claims 6 to 7,
wherein the mass section (24) has a thickness (D) in the range of 4 mm to 5 mm.

9. Grommet (2) according to any one of claims 1 to 8,
having an inner body (14) to which the sealing lip (4) is connected in the radial direction (R) outwardly,
wherein the sealing lip comprises an end section (20), which is in direct contact with a mounting surface (6) after mounting,
wherein the spring section (10) pivotally connects the inner body (14) to the end section (20).

10. Grommet (2) according to any one of claims 1 to 9,
wherein the spring section (10) has a thickness (D) in the range of 1.5 mm to 3 mm.

11. Grommet (2) according to any one of claims 1 to 10,
being configured to be mounted in a wall (8) and having at least one socket or spout (18) for passing a cable, line or conduit (16) through the wall (8).

12. Grommet (2) according to any one of claims 1 to 1211 where the sealing lip (4) is made of EPDM.

13. Grommet (2) according to any one of claims 1 to 12,
wherein the sealing lip (4) is rotationally symmetrical with respect to the longitudinal axis (L).

14. Grommet (2) according to any one of claims 1 to 13,
having an insert (26) for fastening in or on a wall (8) in such a way that the spring section (10) remains compressed after assembly and is thus pretensioned.

## Patentansprüche

1. Tülle (2), die eine Dichtlippe (4) aufweist,
- wobei die Dichtlippe (4) um eine Längsachse (L) verläuft, die sich in einer axialen Richtung (A) erstreckt,
- wobei die Dichtlippe (4) einen Federabschnitt (10) aufweist, der derart konfiguriert ist, dass die Dichtlippe (4) zusammendrückbar ist,
**dadurch gekennzeichnet, dass**
- der Federabschnitt (10) federartig ist, indem er mehrere Segmente (22) aufweist, die sich miteinander verbinden und so den Federabschnitt (10) als Ganzes gelenkig oder scharnierartig machen,
- der Federabschnitt (10) so konfiguriert ist, dass er sich nach außen wölbt, wenn er zusammengedrückt ist.

2. Tülle (2) nach Anspruch 1,
wobei der Federabschnitt (10) so konfiguriert ist, dass die Dichtlippe (4) in einem nicht zusammengedrückten Zustand in axialer Richtung (A) aufgeweitet ist und in einem zusammengedrückten Zustand in radialer Richtung (R) gewölbt ist.

3. Tülle (2) nach einem der Ansprüche 1 bis 2,
wobei die Dichtlippe (4) am Ende derart abgerundet ist, dass sie bei Montage auf einer Montagefläche (6) eine Abrollbewegung in radialer Richtung (R) durchführt, wodurch der Federabschnitt (10) verformt und die Dichtlippe (4) in axialer Richtung (A) zusammengedrückt wird.

4. Tülle (2) nach einem der Ansprüche 1 bis 3,
wobei der Federabschnitt (10) im Querschnitt entlang der Längsachse (L) gesehen stufenförmig ist.

5. Tülle (2) nach einem der Ansprüche 1 bis 3,
wobei der Federabschnitt (10) im Querschnitt entlang der Längsachse (L) gesehen mäanderförmig ist.

6. Tülle (2) nach einem der Ansprüche 1 bis 5,
wobei die Dichtlippe (4) einen Masseabschnitt (24) aufweist, der am Ende des Federabschnitts (10) befestigt ist und der, gemessen in radialer Richtung (R), dicker ist als der Federabschnitt (10).

7. Tülle (2) nach Anspruch 6,
wobei der Masseabschnitt (24) im Querschnitt entlang der Längsachse (L) kugel- oder tropfenförmig ist.

8. Tülle (2) nach einem der Ansprüche 6 bis 7,
wobei der Masseabschnitt (24) eine Dicke (D) im Bereich von 4 mm bis 5 mm aufweist.

9. Tülle (2) nach einem der Ansprüche 1 bis 8,
mit einem Innenkörper (14), mit dem die Dichtlippe (4) in radialer Richtung (R) nach außen verbunden ist,
wobei die Dichtlippe einen Endabschnitt (20) umfasst, der nach der Montage in direktem Kontakt mit einer Montagefläche (6) steht,
wobei der Federabschnitt (10) den Innenkörper (14) schwenkbar mit dem Endabschnitt (20) verbindet.

10. Tülle (2) nach einem der Ansprüche 1 bis 9,
wobei der Federabschnitt (10) eine Dicke (D) im Bereich von 1,5 mm bis 3 mm aufweist.

11. Tülle (2) nach einem der Ansprüche 1 bis 10,
die zur Montage in einer Wand (8) konfiguriert ist und mindestens eine Muffe oder einen Ausguss (18) zur Durchführung eines Kabels, einer Leitung oder eines Rohrs (16) durch die Wand (8) aufweist.

12. Tülle (2) nach einem der Ansprüche 1 bis 11,
wobei die Dichtlippe (4) aus EPDM hergestellt ist.

13. Tülle (2) nach einem der Ansprüche 1 bis 12,
wobei die Dichtlippe (4) bezüglich der Längsachse (L) rotationssymmetrisch ist.

14. Tülle (2) nach einem der Ansprüche 1 bis 13,
mit einem Einsatz (26) zur Befestigung in oder an einer Wand (8), derart, dass der Federabschnitt (10) nach der Montage zusammengedrückt bleibt und somit vorgespannt ist.

## Revendications

1. Œillet (2), qui comporte une lèvre d'étanchéité (4),
- dans lequel la lèvre d'étanchéité (4) se développe autour d'un axe longitudinal (L) qui s'étend dans une direction axiale (A),
- dans lequel la lèvre d'étanchéité (4) comporte une partie faisant ressort (10) configurée de telle façon que la lèvre d'étanchéité est compressible, **caractérisé en ce que**
- la partie faisant ressort (10) est de type ressort du fait qu'elle comporte plusieurs segments (22) qui sont reliés les uns aux autres et constituent ainsi la partie faisant ressort (10) en tant qu'un ensemble articulé ou à charnières,
- la partie faisant ressort (10) est configurée de telle façon qu'elle est bombée vers l'extérieur lorsqu'elle est comprimée.

2. Œillet (2) selon la revendication 1,
dans lequel la partie faisant ressort (10) est configurée de telle façon que la lèvre d'étanchéité (4) est élargie dans la direction axiale (A) dans un état non comprimé et est bombée dans la direction axiale (R) dans un état comprimé.

3. Œillet (2) selon l'une quelconque des revendications 1 et 2,
dans lequel la lèvre d'étanchéité (4) est arrondie à l'extrémité, de sorte qu'elle exécute un mouvement de roulement dans la direction radiale (R) lorsqu'elle est montée sur une surface de montage (6), en déformant ainsi la partie faisant ressort (10) et en comprimant la lèvre d'étanchéité (4) dans la direction axiale (A).

4. Œillet (2) selon l'une quelconque des revendications 1 à 3,
dans lequel la partie faisant ressort (10) est en gradins lorsqu'elle est vue en section transversale le long de l'axe longitudinal (L).

5. Œillet (2) selon l'une quelconque des revendications 1 à 3,
dans lequel la partie faisant ressort (10) est sinueuse lorsqu'elle est vue en section transversale le long de l'axe longitudinal (L).

6. Œillet (2) selon l'une quelconque des revendications 1 à 5,
dans lequel la lèvre d'étanchéité (4) présente une partie massive (24) qui est attachée à l'extrémité de la partie faisant ressort (10) et qui, mesurée dans la direction radiale (R), est plus épaisse que la partie faisant ressort (10).

7. Œillet (2) selon la revendication (6),
dans lequel la partie massive (24) est sphérique ou en forme de goutte en section transversale le long de l'axe longitudinal (L).

8. Œillet (2) selon l'une quelconque des revendications 6 et 7,
dans lequel la partie massive (24) a une épaisseur (D) dans la plage de 4 mm à 5 mm.

9. Œillet (2) selon l'une quelconque des revendications 1 à 8,
présentant un corps interne (14) auquel la lèvre d'étanchéité (4) est reliée dans la direction radiale (R) vers l'extérieur,
dans lequel la lèvre d'étanchéité comprend une partie terminale (20), qui est en contact direct avec une surface de montage (6) après montage,
dans lequel la partie faisant ressort (10) relie de façon pivotante le corps interne (14) à la partie terminale (20).

10. Œillet (2) selon l'une quelconque des revendications 1 à 9,
dans lequel la partie faisant ressort (10) a une épaisseur (D) dans la plage de 1,5 mm à 3 mm.

11. Œillet (2) selon l'une quelconque des revendications 1 à 10,
étant configuré pour être monté dans une paroi (8) et comportant au moins une douille ou un bec (18) pour le passage d'un câble, d'une ligne ou d'un conduit (16) à travers la paroi (8).

12. Œillet (2) selon l'une quelconque des revendications 1 à 11,
dans lequel la lèvre d'étanchéité (4) est constituée d'EPDM.

13. Œillet (2) selon l'une quelconque des revendications 1 à 12,
dans lequel la lèvre d'étanchéité (4) est symétrique en rotation par rapport à l'axe longitudinal (L).

14. Œillet (2) selon l'une quelconque des revendications 1 à 13,
comportant un insert (26) destiné à la fixation dans ou sur une paroi (8) de telle façon que la partie faisant ressort (10) reste comprimée après assemblage et est donc mise en prétension.
